# EUROPÄISCHE PATENTSCHRIFT

(11) **EP 0 675 381 B1**
(45) Veröffentlichungstag und Bekanntmachung des Hinweises auf die Patenterteilung: **03.07.2002**
(21) Anmeldenummer: 95103036.0
(22) Anmeldetag: 03.03.1995
(51) Int. Cl.: G02B 7/02, G02B 7/04

(54) **Grob- und Feintrieb für ein Objektiv**
Coarse and fine adjustment mechanism for an objective
Mécanisme d'adjustement gros-fin pour un objectif

(30) Priorität: 31.03.1994 DE 4411208
(43) Veröffentlichungstag der Anmeldung: 04.10.1995
(73) Patentinhaber: Carl Zeiss, 89518 Heidenheim (Brenz) (DE); CARL ZEISS-STIFTUNG HANDELND ALS CARL ZEISS, D-89518 Heidenheim (Brenz) (DE)
(72) Erfinder: Weber, Uwe, D-73432 Aalen (DE); Flöther, Werner, D-73431 Aalen (DE)

(56) Entgegenhaltungen:
- DE-A- 2 844 773
- DE-A- 3 345 326
- US-A- 4 020 705
- US-A- 4 200 377
- PATENT ABSTRACTS OF JAPAN vol. 014 no. 138 (P-1022) ,15.März 1990 & JP-A-02 003003 (CANON INC) 8.Januar 1990,

## Beschreibung

Die Erfindung betrifft eine Anordnung für die Verstellung von Teilen eines Objektivs mit mindestens einem Einstellring gemäß dem Oberbegriff des Anspruchs 1 und ein Getriebe für die Feinverstellung eines Grobeinstellrings, der drehbar in einem Objektivgehäuse gelagert ist, gemäß dem Oberbegriff des Anspruchs 2.

Es ist bekannt, eine Objektivbewegung wahlweise von zwei verschiedenen Antriebsquellen abzuleiten, insbesondere von einem Motor und einem manuellen Stellring. Bekannt ist dabei die Entkoppelung der Antriebe über eine Rutschkupplung aus DE 27 15 646. Die eigene, nicht vorveröffentlichte, Patentanmeldung DE 43 31 650 sieht ein Planetengetriebe vor. Durch Reibungsbremswirkung wird Stillstand des jeweils nicht aktiven Antriebs erreicht.

Eine manuelle Fokussierung durch Einstellen des Objektabstands mit zwei verschiedenen Übersetzungen (Grob- und Feintrieb) ist für Mikroskope - bei ganz anderen mechanischen Bedingungen - normal, z.B. aus der US 4,020,705 bekannt bei Foto- und Filmobjektiven jedoch außergewöhnlich und nur im hier gegebenen Anwendungsbereich - langbrennweitiges Teleobjektiv für Sport - (schnell) und Naturfotografie (fein), sinnvoll. Üblicherweise verfügen Photo- und Filmobjektive über einen einzigen Entfernungsdrehring. Zur schnellen Fokussierung ist dabei ein kleiner, zur feinfühligen Fokussierung eher ein großer Drehwinkel günstig.

Verschiedene Objektivhersteller bieten daher speziell für langbrennweitige Objektive eine Bereichsumschaltung an, bei der mit einem Schalter oder Drehring ein Entfernungsbereich vorgewählt und danach in diesem Bereich mit dem Entfernungsdrehring über einen größeren Drehwinkel scharfgestellt wird. Dies bedeutet aber, daß der Photograph von vornherein wissen muß, in welchem Bereich er arbeiten will. Kritisch ist dies vor allem an der Bereichsgrenze: Hat der Photograph einen Bereich vorgewählt und versucht das Objekt scharfzustellen, kann jedoch aufgrund der Bereichsgrenze den Schärfepunkt nicht erreichen, so muß er zunächst den Bereich wechseln und dann erneut mit dem Entfernungsring den Schärfepunkt suchen. Dies ist umständlich und zeitaufwendig.

Aufgabe der Erfindung ist es daher, eine benutzerfreundliche getriebliche Lösung für einen manuellen Grob- und Feintrieb für die Objektivfokussierung anzugeben.

Dies gelingt durch die kennzeichnenden Merkmale der Ansprüche 1 und 2 in Verbindung mit ihrem jeweiligen Oberbegriff.

Die Erfindung ermöglicht eine bedienerfreundliche, schnelle und präzise Fokussierung: Das Objektiv ist mit zwei Entfernungseinstellringen ausgestattet, welche beide eine Fokussierung vom Nahbereich bis Unendlich ermöglichen. Der eine Entfernungseinstellring - der Grobeinstellring - verfügt über einen kleinen Drehwinkel und dient zur Schnellfokussierung, z.B. bei Sportaufnahmen, und zur groben Vorfokussierung, z.B. bei Naturaufnahmen. Der andere Entfernungseinstellring - der Feineinstellring - verfügt über einen großen Drehwinkel (mehrere Umdrehungen des Rings vom Nahbereich bis Unendlich) und dient zur Feinfokussierung, z.B. bei Naturaufnahmen.

Der Photograph versucht zunächst am Grobeinstellring in die Nähe des Schärfepunktes zu kommen, greift dann mit der Hand auf den Feineinstellring um und stellt exakt die Schärfe ein.

Der Grobeinstellring treibt über ein Gewinde oder eine Kurve (Grobtrieb) direkt das linear zu verschiebende optische Glied an. Der Feinstellring ist über ein Untersetzungsgetriebe und eine Rutschkupplung mit dem Grobeinstellring verbunden. Das Untersetzungsgetriebe wandelt einen großen Drehwinkel des Feineinstellrings in einen kleinen Drehwinkel des Grobeinstellring um. Die am Grobeinstellring angebrachte Entfernungsskala ist deshalb auch für den indirekten Antrieb über den Feineinstellring gültig.

Bei höheren Untersetzungen des Getriebes sollte sich durch die Betätigung des Grobeinstellrings nicht auch der Feineinstellring mit hoher Drehzahl in Bewegung setzen. Zudem ist das Getriebe bei der Übersetzung ins Langsame ohnehin selbsthemmend, da schon die geringen Reibmomente in den Lagerstellen der Zahnräder ausreichen, um das Getriebe zu blockieren. Deshalb sitzt zwischen dem Abtriebsrad des Feintriebs und dem Grobeinstellring eine Rutschkupplung. Diese ist so ausgelegt, daß sie bei Betätigung des Feineinstellrings das Drehmoment des Abtriebsrades des Feintriebs auf den Grobeinstellring überträgt. Das übertragbare Drehmoment der Rutschkupplung muß also größer sein als das Antriebsmoment des Grobtriebs. Bei Betätigung des Grobeinstellring sperrt das Getriebe des Feintriebs, die Rutschkupplung dreht durch. Zudem schützt die Rutschkupplung das Getriebe des Feintriebs vor Beschädigung bei gleichzeitiger Bedienung von Grob- und Feineinstellring und bei Erreichen der Anschläge in den Endlagen mit dem Feintrieb.

Eine besonders vorteilhafte Ausführungsform nach Anspruch 3 hat zur Übertragung vom Sonnenrad auf das Abtriebsrad nur ein Planetenrad - das natürlich über den Umfang verteilt mehrfach angeordnet sein kann. Dies ist möglich, wenn Sonnenrad und Abtriebsrad viele Zähne haben, die Zähnezahl nur wenig differiert und eines davon eine Profilverschiebung aufweist.

Damit wird vor allem die Montage erleichtert, da statt zwei Ritzeln, die bezügliche Drehung um ihre Welle für alle auf dem Umfang verteilten Planetenräder genau gleich justiert sein müßten, nur noch ein Ritzel auf jede Welle des Stegs gesetzt werden muß.

Im folgenden wird die Erfindung mittels der Zeichnung näher erläutert:
- Fig. 1: zeigt einen schematisierten Querschnitt durch ein erfindungsgemäßes Getriebe;
- Fig. 2: zeigt das Getriebeschema eines bei der Erfindung vorgesehenen Planetengetriebes;
- Fig. 3: zeigt ein Getriebeschema in bevorzugter Ausführungsform;

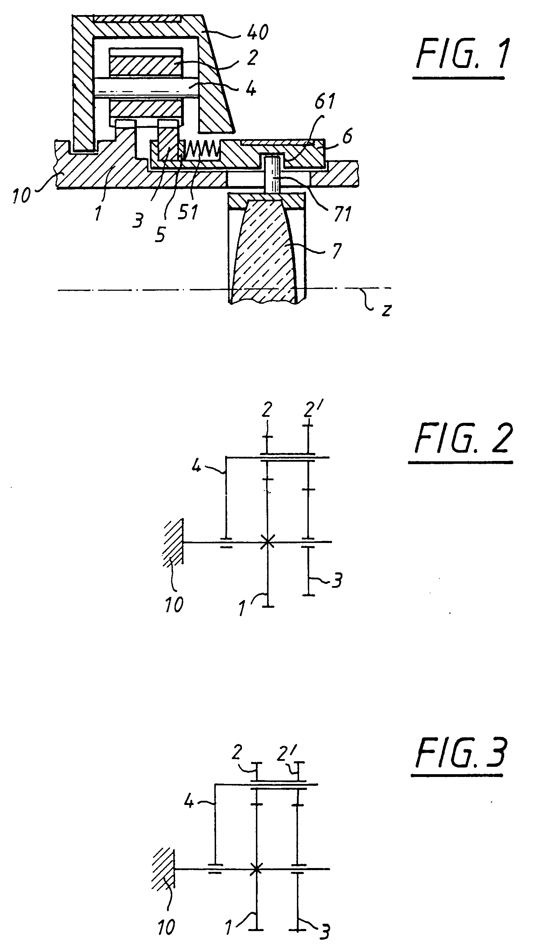

In Figur 1 trägt das ausschnittsweise dargestellte Objektivgehäuse (10) ein feststehendes Sonnenrad (1) (mit positiver Profil-Verschiebung). Ein Planetenrad (2) läuft auf dem Steg (4), der mit einem Feineinstellring (40) vereinigt ist und auf dem Objektivgehäuse (10) um dessen Hauptachse (Z) drehbar gelagert ist. Das Planetenrad (2) ist über dem Umfang verteilt mehrfach, vorzugsweise dreifach, vorhanden. Das Planetenrad (2) steht außerdem in Eingriff mit dem Abtriebsrad (3) (Nullrad), welches über eine Rutschkupplung (5) mit Belastungsfeder (51) drehbar mit dem Grobeinstellring (6) verbunden ist. Der Grobeinstellring (6) ist auf dem Objektivgehäuse (10) um dessen Hauptachse (Z) drehbar gelagert und weist eine Steuerkurve (61) auf. In diese greift ein Nocken (71) eines Schiebegliedes (7). Durch das so gebildete Kurvengetriebe wird in bekannter Weise eine Drehbewegung des Grobeinstellrings (6) in eine Fokussierbewegung längs der Hauptachse (Z) umgewandelt.

Da das Planetengetriebe (1, 2, 3, 4) vom Abtriebsrad (3) her selbsthemmend ist und die Rutschkupplung (5) geeignet eingestellt ist, bleibt der Feineinstellring (40) dabei stehen.

Wird der Feineinstellring (40) gedreht, so rollt dabei das Planetenrad (2) auf dem feststehenden Sonnenrad (1) ab und nimmt wegen der unterschiedlichen Zähnezahl das Abtriebsrad (3) mit. Dieses ist mittels der Rutschkupplung (5) mit dem Grobeinstellring (6) verbunden, der also mitgedreht wird und wie oben beschrieben die Verstellung des Schiebeglieds (7) bewirkt.

Das Planetengetriebe (1, 2, 3, 4) ist in Fig. 2 als Getriebeschema in seiner normalen Grundform nochmals dargestellt. Hier sind auf dem Steg (4) mit der Drehzahl N₄ miteinander starr verbunden zwei Planetenräder 2, 2' mit den Zähnezahlen Z₂, Z₂' angeordnet. Das feststehende Sonnenrad (1) hat die Zähnezahl Z₁. Das Abtriebsrad (3) hat die Zähnezahl Z₃ und die Drehzahl N₃.

Das Übersetzungsverhältnis ist dann N₃/N₄ = 1 - (Z₁ · Z₂' / Z₂ · Z₃). Gleicher Umlaufsinn von Steg (4) (d.h. Feineinstellring (40)) und Abtriebsrad (3) (d.h. Grobeinstellring (6)) ergibt sich, wenn Z₁ kleiner als Z₃ ist.

Je geringer die Differenz der Zähnezahlen Z₁ und Z₂ ist, um so größer ist die Untersetzung. Durch Anrücken des Ritzels an die beiden Räder (1) und (3) kann das Getriebe spielfrei eingestellt werden. Die Planetenräder (2, 2') sollten möglichst dreimal am Umfang verteilt werden, damit keine einseitigen Kräfte im Getriebe auftreten. Deshalb muß die Zähnezahldifferenz von Z₁ und Z₃ ein Vielfaches von 3 sein.

Die Zähne der Planetenräder (2) und (2') müßten genau zueinander ausgerichtet werden. Um dies zu umgehen und um den Getriebeaufbau zu vereinfachen, wird eine Abwandlung gemäß Schema Fig. 3 eingeführt, die auch schon in Fig. 1 berücksichtigt ist. Hierbei ist Z₂ = Z₂', d.h. es ist nur noch ein durchgehendes Ritzel als Planetenrad (2) vorhanden, das in das Sonnenrad (1) und in das Abtriebszahnrad (3) eingreift. Dies ist möglich, da Sonnenrad (1) und Abtriebsrad (3) viele Zähne haben, ihre Zähnezahl Z₁, Z₃ nur wenig differiert und das Sonnenrad (1) (Z₁ < Z₃) eine positive Profilverschiebung des Zahnprofils aufweist, der effektive Laufkreisdurchmesser in der Paarung Sonnenrad (1) /Planetenrad (2) also von dem der Paarung Abtriebsrad (3) /Planetenrad (2) abweicht. Das Übersetzungsverhältnis ist hierbei N₃/N₄ = 1 - Z₁/Z₃.

Ein ausgeführtes Beispiel weist folgende Daten des Planetengetriebes auf: Zähnezahl Z₁ = 237 des Sonnenrads (1). Zähnezahl Z₃ = Z₁ + 3 = 240 des Abtriebsrads (3), da drei Planetenräder (2) über den Umfang verteilt zur Momentenübertragung eingesetzt werden. Zähnezahl Z₂ = 20 des Planetenrads (2). Modul 0,5. Die Übersetzung ist dann N₃/N₄ = 1/80.

Der Grobtrieb aus Grobeinstellring (6) mit Steuerkurve (61), Nocken (71) und Schiebeglied (7) ist als Schraubengetriebe mit 120° Drehwinkel und 20 mm Hub ausgebildet. Eine Drehung am Grobeinstellring (6) um 1° bewirkt daher eine Verschiebung des Schiebeglieds (7) von 0,17 mm.

Eine Drehung am Feineinstellring (40) um 1° bewirkt nur eine Verschiebung des Schiebeglieds (7) von 0,002 mm, also 1/80 des obigen Werts.

Statt eines Zahnradgetriebes kann für das Planetengetriebe (1, 2, 3, 4) nach Fig. 2 auch ein Reibradgetriebe vorgesehen werden, wobei dann die beiden Planetenräder (2, 2') zu einem Kegelrad vereinigt sein können.

## Patentansprüche

1. Anordnung für die Verstellung von Teilen eines Foto- oder Filmobjektives mit mindestens einem Grobeinstellring (6), **dadurch gekennzeichnet, daß** zusätzlich ein Feineinstellring (40) vorhanden ist, und die Einstellringe (6, 40) über ein Untersetzungsgetriebe und eine Rutschkupplung (5) miteinander gekoppelt sind, wobei über diese Rutschkupplung eine Bewegung des Feineinstellringes (40) auf den Grobeinstellring (6) übertragen wird und wobei bei Betätigung des Grobeinstellringes (6) über die Rutschkupplung (5) keine Bewegung auf den Feineinstellring (40) übertragen wird.

2. Getriebe für eine Anordnung nach Anspruch 1 zur Feinverstellung eines Grobeinstellrings (6), der drehbar in einem Objektivgehäuse (10) gelagert ist, **gekennzeichnet durch** ein fest im Objektivgehäuse (10) angeordnetes Sonnenrad (1), **durch** einen als Steg (4) ausgebildeten Feinverstellring (40), worin auf dem steg (4) laufende Planetenräder (2,2') gelagert sind, und ein über eine Rutschkupplung (5) drehbar an dem Grobeinstellring (6) angeordnetes Abtriebsrad (3), wobei die Planetenräder (2,2') im Eingriff mit dem Sonnenrad (1) und dem Abtriebsrad (3) stehen.

3. Getriebe nach Anspruch 2, **dadurch gekennzeichnet, daß** das Getriebe als Zahnradgetriebe ausgeführt ist, daß die auf dem Steg (4) laufenden Planetenräder (2, 2'), welche im Eingriff mit dem Sonnenrad (1) und dem Abtriebsrad (3) stehen, gleich sind und daß das Sonnenrad (1) oder das Abtriebsrad (3) eine Profilverschiebung aufweist.

## Claims

1. Arrangement for the adjustment of parts of a photographic or film objective, having at least one coarse setting ring (6), **characterized in that** there is additionally a fine setting ring (40), and the setting rings (6, 40) are coupled to each other via a step-down gear mechanism and a slipping clutch (5), a movement of the fine setting ring (40) being transmitted via this slipping clutch to the coarse setting ring (6), and no movement being transmitted to the. fine setting ring (40) via the slipping clutch (5) when the coarse setting ring (6) is operated.

2. Gear mechanism for an arrangement according to Claim 1 for the fine adjustment of a coarse setting ring (6), which is rotatably mounted in an objective housing (10), **characterized by** a sun wheel (1) which is arranged to be fixed in the objective housing (10) by a fine adjusting ring (40) which is designed as a web (4) and in which planet wheels (2, 2') running on the web (4) are mounted, and a driven wheel (3) which is arranged on the coarse setting ring (6) such that it can be rotated via a slipping clutch (5), the planet wheels (2, 2') engaging with the sun wheel (1) and the driven wheel (3).

3. Gear mechanism according to Claim 2, **characterized in that** the gear mechanism is designed as a toothed gear mechanism, **in that** the planet wheels (2, 2') which run on the web (4) and which engage with the sun wheel (1) and the driven wheel (3) are identical, and **in that** the sun wheel (1) or the driven wheel (3) has a profile displacement.

## Revendications

1. Arrangement pour le réglage d'éléments d'un objectif photographique ou cinématographique avec au moins une bague de réglage grossier (6), **caractérisé en ce qu'**une bague de réglage fin (40) soit de plus disponible et que les bagues de réglage (6, 40) sont mutuellement accouplées par l'intermédiaire d'un train réducteur et d'un accouplement à glissement (5), un mouvement de la bague de réglage fin (40) étant transmis à la bague de réglage grossier (6) par l'intermédiaire de cet accouplement à glissement et la manoeuvre de la bague de réglage grossier (6) ne transmettant aucun mouvement par l'intermédiaire de l'accouplement à glissement (5) à la bague de réglage fin (40).

2. Train pour un arrangement selon la revendication 1 pour le réglage fin d'une bague de réglage grossier (6), installé de manière rotative dans un boîtier d'objectif (10), **caractérisé par** une roue solaire (1) disposée solidement dans le boîtier de l'objectif (10), par une bague de réglable fin (40) sous forme d'une entretoise (4), dans lequel sont installés des rouages planétaires (2, 2') tournant sur l'entretoise (4), et une roue menée (3) disposée sur la bague de réglage grossier (6) de manière rotative par l'intermédiaire d'un accouplement à glissement (5), les rouages planétaires (2, 2') étant engrenés avec la roue solaire (1) et la roue menée (3).

3. Train selon la revendication 2, **caractérisé en ce que** le train est réalisé sous forme d'un train d'engrenages, **en ce que** les rouages planétaires (2, 2') tournant sur l'entretoise (4), se trouvant engrenés avec la roue solaire (1) et la roue menée (3) sont identiques et **en ce que** la roue solaire (1) ou la roue menée (3) présente un décalage de profil.
